Europäisches Patentamt

European Patent Office

Office européen des brevets

(11) Numéro de publication: **0 401 137**
**A1**

(12) **DEMANDE DE BREVET EUROPEEN**

(21) Numéro de dépôt: 90420260.3

(22) Date de dépôt: **30.05.90**

(51) Int. Cl.⁵: **B65B 9/02, B65B 51/18**

(30) Priorité: **02.06.89 FR 8907698**

(43) Date de publication de la demande:
**05.12.90 Bulletin 90/49**

(84) Etats contractants désignés:
**AT BE CH DE DK ES FR GB GR IT LI LU NL SE**

(71) Demandeur: **PACK PLUS S.A.R.L.**
**29, Petite Rue Pasteur**
**F-69100 Villeurbane (Rhône)(FR)**

(72) Inventeur: **Valle, Roland**
**27 petite rue Pasteur**
**F-69100 Villeurbanne (Rhône)(FR)**
Inventeur: **Duffner, Hervé**
**166, rue du Quatre Août**
**F-69100 Villeurbanne (Rhône)(FR)**

(74) Mandataire: **Perrier, Jean-Pierre et al**
**Cabinet GERMAIN & MAUREAU 12 rue de la**
**République**
**F-42000 St-Etienne(FR)**

(54) Installation de conditionnement automatique d'objets sous film souple.

(57) Cette installation comprend, de part et d'autre du plan médian horizontal (P), des paquets (1) en déplacement sur une succession de convoyeurs à bande (86, 7 et 8),
- d'une part, au poste de chargement des objets, un préconformateur (A1) et un conformateur (A2), amenant chacun des films, respectivement supérieurs et inférieurs, d'une configuration plane à une configuration en demi-tunnel coiffant le paquet et ayant en section transversale la forme d'un "U" dont les ailes sont munies de retours latéraux externes,
- d'autre part, immédiatement en aval de la zone de formation des demi-tunnels, et de part et d'autre des flancs de ces tunnels, des lames chauffantes verticales (92) pour sectionner les retours et former deux soudures longitudinales, minces et rectilignes, liant les flancs des demi-tunnels,
- tandis que les moyens communiquant l'effort de tirage à chacun des films (2-3), au tunnel et à l'objet (1), disposé dans ce tunnel, sont constitués, du poste de chargement jusqu' au début du convoyeur (8) d'évacuation des paquets, par les seuls mâchoires transversales (15-17) de soudage et de découpage des films.

FIG.2

EP 0 401 137 A1

L'invention est relative à une installation de conditionnement automatique d'objets sous film souple du type dans laquelle chacun des objets se déplaçant avec une file d'objets espacés d'un pas constant est engagé entre deux couches de film souple, respectivement supérieur et inférieur, qui, ultérieurement, sont soumises à une opération de soudure transversale assurant leur liaison, puis à une opération de liaison de leurs bords longitudinaux, dépassant latéralement de l'objet. Si besoin est, le conditionnement ainsi formé est introduit ultérieurement dans un tunnel de chauffage assurant la thermorétraction de l'enveloppe sur cet objet.

Le brevet britannique 1155206 décrit une installation de ce type dans laquelle les soudures transversales, effectuées avant les soudures longitudinales, sont réalisées pendant le défilement du paquet au moyen de deux mâchoires qui, respectivement, supérieure de soudage et découpage et inférieure formant contrepartie, pincent les films souples dans l'intervalle entre deux paquets. Chacune des extrémités de chacune de ces mâchoires est portée, avec des mâchoires semblables, par des chaines ou autres décrivant une trajectoire fermée comportant un trajet de travail, dans lequel chaque mâchoire supérieure est plaquée sur sa contre-mâchoire inférieure et pince les deux films, et un trajet de retour. En sortie de ce poste, chaque paquet est inclu dans une gaine tubulaire transversale dont les extrémités, dépassant de la largeur de ce paquet, sont liées par des soudures longitunales dentelées.

Un tel dispositif ne peut pas être utilisé pour réaliser un conditionnement comportant des soudures longitudinales rectilignes et fines sur des paquets ayant une hauteur supérieure à quelques centimètres. En effet, en raison de l'absence, dans l'intervalle entre le poste de soudage transversal et le poste de soudage longitudinal, de moyens maintenant les extrémités latérales de la gaine, ces extrémités ne se superposent pas parfaitement au début de leur pincement au poste de soudage longitudinal, de sorte que, lors de la réalisation de cette soudure longitudinale, rectiligne par nature, les parties de gaine, constituant les flancs du paquet, ont des hauteurs variables. Cela donne à la soudure une allure non rectiligne qui détériore l'aspect esthétique du conditionnement. Cette détérioration est d'autant plus visible que le paquet est haut.

Un objet de l'invention est de remédier à ces inconvénients afin que les conditionnements aient une bonne présentation, c'est à dire possèdent des flancs composés de parties de film de hauteur constante, séparées par des soudures rectilignes et continues, parfaitement positionnées à mi-hauteur du paquet.

Un autre inconvénient des installations de ce type provient du fait que l'effort de tirage des films assurant leur dévidage des bobines et leur répartition de part et d'autre du trajet des paquets est assuré par le paquet qui, en appui sur la soudure transversale de liaison des films, disposée en aval de lui, est lui-même poussé par des taquets latéraux. En effet, un tel moyen d'entrainement ne convient pas pour des paquets ou objets fragiles, ne résistant pas à la pression des taquets, pour des paquets instables pouvant basculer sous la pression localisée des taquets ou encore pour des paquets pouvant se déformer en perturbant le cycle de conditionnement.

Un autre objet de l'invention est de fournir une installation pouvant assurer le conditionnement de tout paquet ou objet quelle que soit sa structure ou sa résistance. On connait déjà par la demande de brevet britannique 2065590 un dispositif pour conditionner sous films souples des articles médicaux cylindriques tels que des seringues, au moyen de deux nappes de films, conformées en oméga dans la zone de chargement pour former deux demi-tunnels, dont les bords longitudinaux sont soudés avec dentelage avant réalisation de soudures transversales sécantant celles longitudinales. Un tel dispositif n'est pas applicable aux objets non cylindriques car alors, l'excédant d'enveloppe par rapport à la périphérie de l'objet, forme des retours irréguliers perturbant la soudure. Il n'est pas applicable non plus aux objets ayant au moins une dimension transversale de l'ordre de quelques centimètres car les demi tunnels perdent leur profil transversal régulier entre les moyens de maintien forcés de leurs retours et les moyens réalisant les soudures longitudinales dentelées, et permettent à leurs films constitutifs de se déplacer transversalement l'un par rapport à l'autre en formant des retours latéraux irréguliers, inesthétiques et perturbant la soudure.

Un autre objet de l'invention est de fournir une installation qui assure un excellent maintien transversal des films, qui soit réglable et adaptable pour conditionner, dans les mêmes conditions optimales, des séries de paquets de dimensions transversales différentes, faibles ou grandes.

A cet effet, l'installation selon l'invention comprend :
- au poste de chargement des objets 1, des moyens composés, de part et d'autre du plan médian horizontal et en aval de chaque bobine, d'un préconformateur qui, renvoyant le film en direction du plan précité en lui donnant une section transversale en "U", est constitué, d'une part, par une plaque, parallèle au plan de contact précité, contre laquelle le film défile parallèlement et présentant en vue de dessus une forme trapézoïdale isocèle avec son petit côté tourné vers l'aval, et, d'autre part, par au moins deux guides de renvoi constitués par des tiges cylindriques, parallèles à la trajectoire du film et disposées en coincidence avec les extrémités du petit côté de la palque, et d'un conformateur qui, renvoyant le film sur une trajectoire parallèle au plan médian horizontal, en donnant à ce film une forme de demi-tunnel en "U" dont la concavité est tournée vers ce plan, est constitué par un caisson de section en "U", dont lâme est parallèle au plan précité, avec son bord amont à l'aplomb du bord aval du préconformateur, et dont les ailes sont tournées du côté de ce plan médian, sont munies chacune d'un retour, coudé vers l'extérieur, et présentent chacune un bord amont pentu, et des moyens pour former, en bordure de chacun des flancs du demi-tunnel, un retour latéral venant en contact, dans le plan médian horizontal, avec le retour formé dans l'autre film;

mmédiatement en aval de la zone de formation des demi-tunnels, et de part et d'autre des flancs de ces derniers, deux lames chauffantes verticales qui, intercalées chacune entre des paires amont et aval de galets de maintien des retours, sectionnent ces retours et forment deux soudures longitudinales, minces et rectilignes, liant les flancs des demi-tunnels, tandis que les moyens communiquant l'effort de tirage à chacun des films, au tunnel et à l'objet disposé dans ce tunnel, sont constitués, du poste de chargement jusqu'au début du convoyeur d'évacuation des paquets, par les seules mâchoires transversales.

Avec cette installation, immédiatement après leur formation, les deux demi-tunnels sont liés par des soudures longitudinales régulières qui sont réalisées sur les retours près de leurs flancs, en même temps que sont découpés les retours qui, jusqu'alors, permettaient leur positionnement et leur maintien transversal localisé. Grâce à cela, peu après le poste de chargement, les films ne risquent pas de glisser transversalement et les soudures s'effectuent dans des conditions optimales et sont donc régulières, tandis que le tunnel obtenu possède une section rectangulaire régulière favorisant le soudage ultérieur par les mâchoires transversales et permettant de l'utiliser comme élément d'entrainement de l'objet qu'il contient, sous la seule traction des mâchoires.

Avec cet agencement, l'objet disposé dans le tunnel et reposant sur le film inférieur, lui-même en appui sur des surfaces de repos ou sur les brins supérieurs des convoyeurs, n'est soumis à aucune contrainte et suit donc sans difficulté les déplacements du tunnel. Il faut noter aussi que c'est la seule fermeture des mâchoires sur le tunnel qui provoque le dévidage des deux bobines de film et donne à la partie de tunnel disposée entre deux objets, un accroissement de longueur correspondant juste aux besoins afin que, à la fermeture de ces mâchoires, les portions de films, respectivement, supérieure et inférieure, intercalées entre les objets, soient sans tension et aient des longueurs égales, seules conditions d'obtention d'une soudure régulière.

Dans une forme d'exécution de l'invention, les moyens de conformation des films, les moyens de liaison des retours latéraux des demi-tunnels, et les jeux de mâchoires avec leurs moyens d'entrainement, de guidage et d'alimentation, sont disposés sur un châssis, indépendant du bâti de l'installation portant les convoyeurs, mobile verticalement par rapport à ce bâti et lié à lui par des moyens de réglage de sa position verticale pour amener le plan médian horizontal du tunnel dans le plan médian horizontal des objets, quelle que soit la hauteur de ces objets.

Cet agencement permet, non seulement, d'ajuster parfaitement la position des éléments de l'installation par rapport aux plans des convoyeurs, afin d'obtenir des soudures transversales et longitudinales parfaitement à mi hauteur des objets, mais aussi permet de régler l'installation, rapidement et aisément, pour l'adapter aux variations de hauteur des séries d'objet devant être conditionnées sous films souples. D'autres caractéristiques et avantages ressortiront de la description qui suit en référence aux dessins schématiques annexés représentant à titre d'exemples non limitatifs plusieurs formesd'exécution de l'installation selon l'invention.

Figure 1 est une vue en perspective du produit fini en sortie de l'installation et avant passage dans un tunnel de chauffage pour thermorétraction,

Figure 2 est une vue de côté en coupe transversale de l'ensemble de l'installation,

Figure 3 est une vue en coupe suivant III-III de figure 2,

Figure 4 est une vue en coupe suivant IV-IV de figure 2 montrant, à échelle agrandie, une forme d'exécution d'un jeu de mâchoires lorsque celles-ci sont en position de soudage et de découpage,

Figure 5 est une vue en coupe suivant V-V de figure 2 montrant, à échelle agrandie, la section du tunnel d'enveloppement des objets lors de la réalisation des soudures longitudinales,

Figure 6 est une vue en perspective montrant plus en détails les moyens assurant le soudage et le découpage des retours latéraux,

Figure 7 est une vue en perspective partielle montrant les éléments constitutifs de l'une des deux parties d'une première forme d'exécution des moyens de conformation,

Figure 8 est une vue en perspective partielle montrant les deux parties du dispositif de figure 7 lors de la mise en forme du tunnel,

Figure 9 est une vue en perspective représentant les conformations successives de l'un des deux films obtenues par le dispositif représenté aux figures 7 et 8,

Figure 10 est une vue partielle en perspective montrant une autre forme d'exécution de l'une des deux parties des moyens de conformation du film,

Figure 11 est une vue en perspective montrant une autre forme d'exécution du dispositif.

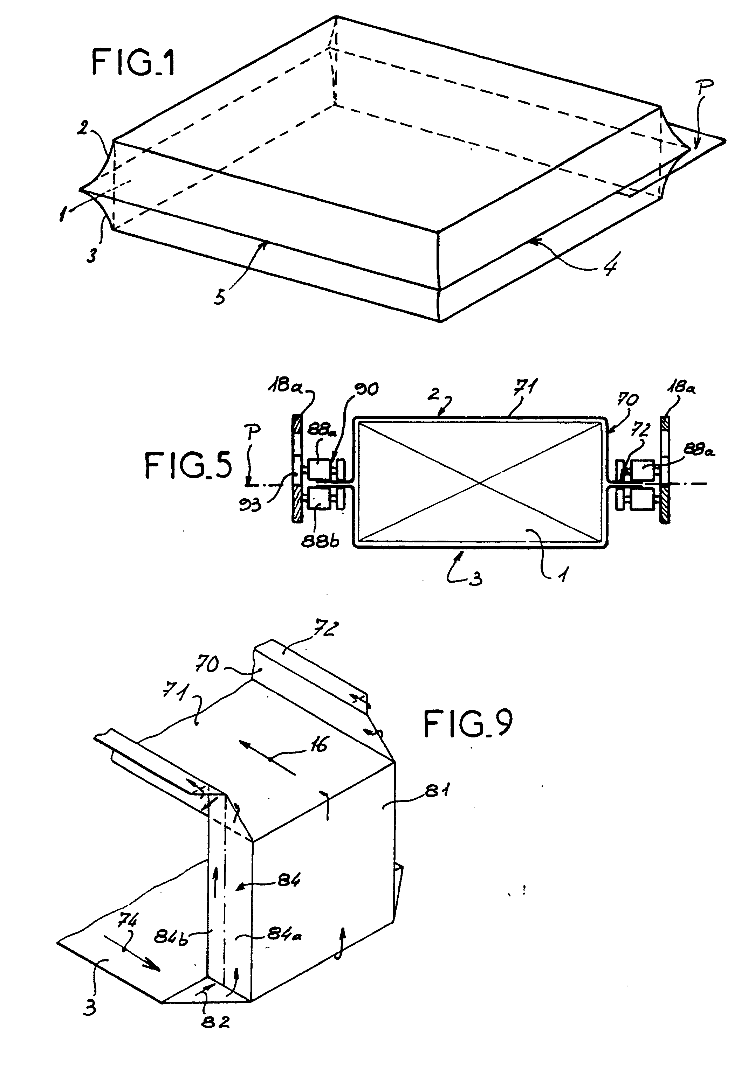

La figure 1 montre le produit fini, en sortie de l'isntallation de conditionnement et avant éventuel passage dans un tunnel de thermorétraction. L'objet 1 est ici parallèlépipèdique, comme pourrait l'être un annuaire téléphonique, mais il est évident qu'il peut être constitué par un objet de tout autre forme, tel qu'un pullover ou un vêtement plié, un carton d'emballage, un conditionnement regroupant divers produits alimentaires, tels que des boîtes de conserve ou des oeufs... Cet objet est emballé de manière étanche entre deux films, supérieur 2 et inférieur 3, en matière synthétique, transparente ou non, et par exemple en polyéthylène. La figure met en évidence que les deux films sont liés l'un à l'autre par des soudures transversales 4 et longitudinales 5 situées à mi hauteur de l'objet et plus précisément dans le plan médian horizontal P de cet objet. Ces soudures sont parfaitement rectilignes et sont constituées par un cordon de matière de faible section et peu visible.

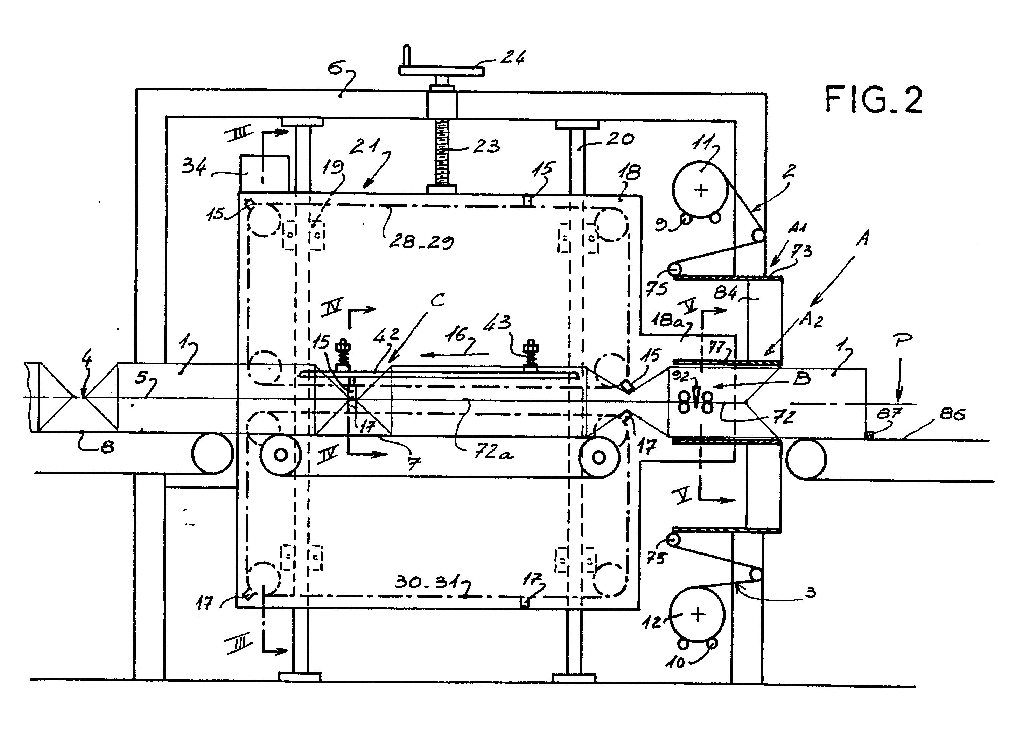

L'installation représentée aux figures 2 à 6 est du type comportant un bâti 6 supportant deux convoyeurs à bande respectivement 7 et 8, et des supports 9 et 10 pour des bobines, respectivement, supérieure 11 et inférieure 12. L'installation comprend également des moyens A de conformation et de renvoi des films 2 et 3 se dévidant des bobines 11 et 12 pour amener ces films de part et d'autre de la trajectoire des objets à emballer, des moyens B pour réaliser des soudures longitudinales de liaison des deux films et, enfin, des moyens C pour réaliser des soudures transversales dans la partie de film entre deux objets contigus.

De façon connue, les moyens C assurant les soudures transversales sont constituées par deux jeux de mâchoires transversales, à savoir un premier jeu de mâchoires 15 de soudage et de découpage et un second jeu de contre mâchoires 17. Les mâchoires 15 sont disposées transversalement à la direction de déplacement des objets, représentée par la flèche 16, et sont fixées par leurs extrémités sur deux chaines 28-29. Celles-ci décrivent une trajectoire fermée comportant un trajet de travail, pendant lequel chaque mâchoire 15 se déplace parallèlement à la direction de déplacement des objets et sensiblement au milieu de la hauteur de ces objets, et un trajet de retour, ramenant la mâchoire à son point de départ. Les contre mâchoires 17 sont disposées au dessous des mâchoires, et sont fixées, comme elles, sur des chaines 30-31 décrivant des trajectoires fermées. Les mouvements des mâchoires et contre mâchoires sont synchronisés afin que celles-ci viennent en coincidence, dans le trajet de travail, pour pincer entre elles les deux films 2 et 3. La vitesse de déplacement de ces mâchoires est égale à la vitesse de déplacement de la bande du convoyeur 7 et de celui 8, si ce dernier est entrainé. Les chaines sont entrainées par un motoréducteur 34 avec transmission 35, et des pignons de renvois 36.

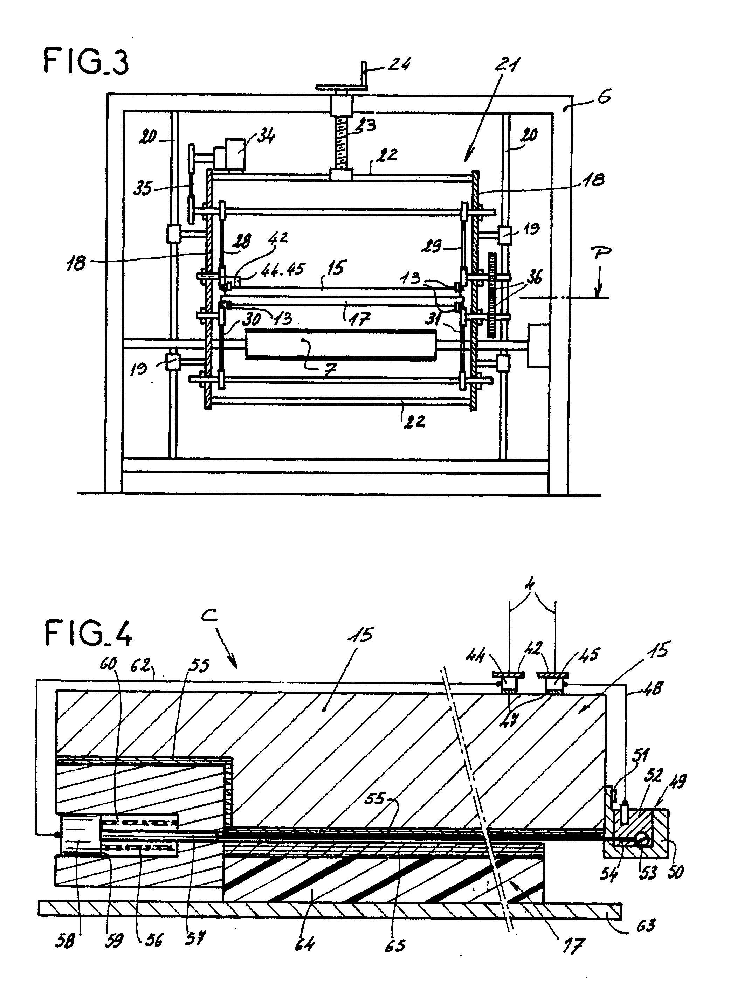

Selon l'invention, les jeux de mâchoires 15-17 et leurs moyens d'entrainement sont portés par un châssis 21 constitué par des plaques latérales 18 montées mobiles par rapport au bâti 6. A cet effet, et comme le montre la figure 3, chacune des plaques latérales 18 est solidaire de paliers 19 pouvant coulisser sur des colonnes 20 du châssis. Les plaques 18 sont reliées par des traverses 22 dont l'une est reliée au bâti 6 par un système vis-écrou 23 actionnable par une manivelle 24. Cet agencement permet de régler la position verticale du plan de contact des mâchoires 15-17 avec le plan médian horizontal P des objets. afin de régler la machine en fonction des variations de hauteur des objets.

L'alimentation électrique des mâchoires de soudage et découpage 15 est assurée de manière intermittente et seulement lorsque chacune de ces mâchoires 15 est en déplacement sur son trajet de travail. A cet effet, et comme le montre la figure 2, durant ce trajet, chaque mâchoire 15 coopère avec des frotteurs longitudinaux 42 repoussés vers le bas par des ressorts réglables 43. En pratique et comme le montre la figure 4, ces frotteurs 42 alimentés électriquement par des fils 41 coopèrent chacun avec des plots conducteurs 44 et 45 montés coulissants dans des puits isolants 47 solidaires du corps métallique de la mâchoire. Le plot 45 est relié électriquement par un fil 48 à une borne de connection 49 dont le corps extérieur 50 est isolant et est fixé sur une extrémité de la mâchoire 15 au moyen d'une vis 51. La partie conductrice 52 de cette borne 49 est raccordée par une vis 53 à l'une des extrémités d'un fil résistif 54 associé à la mâchoire 15 et servant à la fois au soudage et à la découpe transversale par effet joule des deux épaisseurs de film 2 et 3. Ce fil résistif 54 est tendu sous la barre 15 et plaqué contre une couche isolante 55. Cette tension est obtenue par un ressort hélicoïdal 56 travaillant en compression et interposé entre l'épaulement 59 d'un piston 58 et le fond du logement 60 dans lequel ce piston coulisse. La tige 57 de ce piston est relié mécaniquement à l'autre extrémité du fil résistif 54 et sa tête 58 est reliée électriquement, par un fil 62, au plot 44 en contact avec l'un des frotteurs 42.

Grâce à cet agencement, lorsque la mâchoire de soudage 15 est déjà en appui contre la contre-mâchoire 17, en plaquant entre elles les deux épaisseurs du film, et aborde son trajet de travail, elle parvient au niveau de l'extrémité amont des deux frotteurs 42 et peut alors être alimentée électriquement. Cette alimentation peut s'effectuée sur la totalité de la longueur des frotteurs, mais elle peut aussi s'effectuer sur une longueur plus courte, sous le contrôle de l'automate régissant le fonctionnement des divers moyens de l'installation. Lorsque le fil résistif 54 est alimenté en courant et qu'il s'allonge et se dilate, son allongement est absorbé par l'ensemble piston 58 - ressort de compression 56.

La contre-mâchoire 17, montrée à la figure 4, est composée d'une plaque métallique longitudinale 63, d'une plaque 64 en mousse de silicone et, enfin, d'une plaque 65 plus mince, en polychlorure de vinyl constituant la contreplaque d'appui.

Comme représenté schématiquement sur la figure 2, les chaines peuvent porter plus d'un couple de mâchoires 15-17, ce qui est indispensable pour conditionner des objets 1 ayant une longueur inférieure au trajet de travail des mâchoires. Ces mâchoires sont fixées sur les chaines par des moyens permettant leur amovibilité et par exemple par fixation de pattes, ménagée aux extrémités des chaines, au moyen de vis se fixant dans les maillons des chaines. Cet agencement permet d'ajuster le nombre des mâchoires et le pas entre mâchoires, en fonction de la longueur des objets ou paquets, dont il faut assurer le conditionnement.

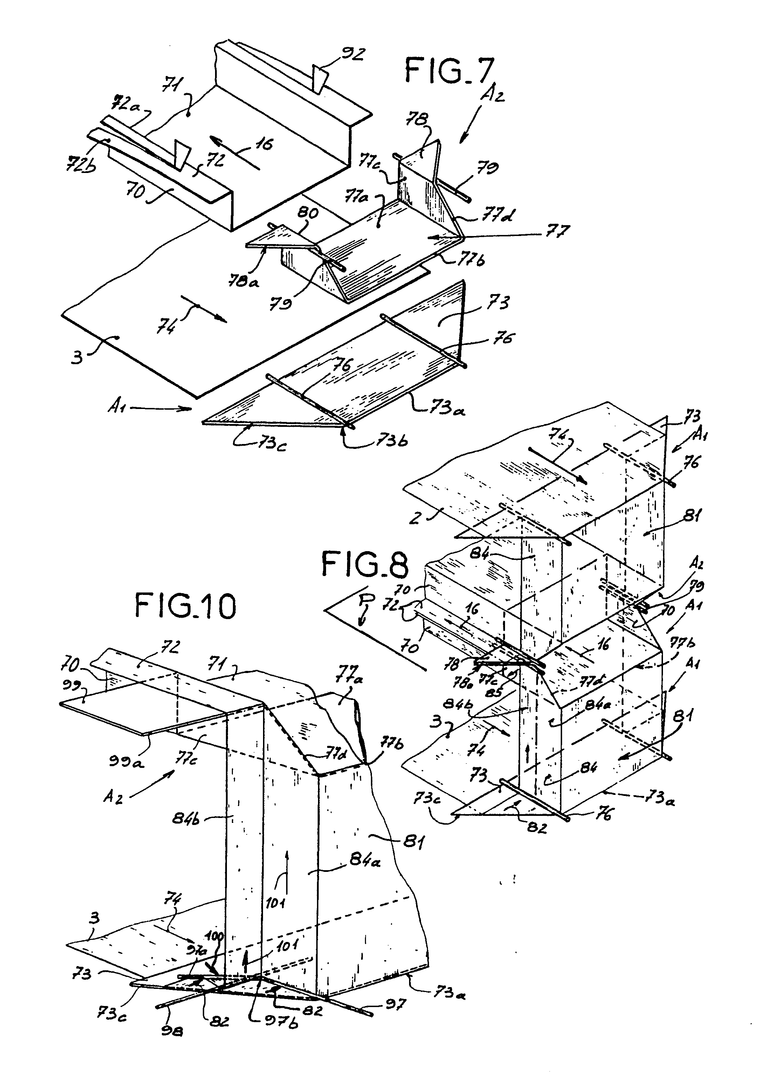

Suivant une autre caractéristique de l'invention, les moyens A de conformation et de renvoi des films 2 et 3, de part et d'autre de la trajectoire des objets 1, sont agencés pour donner à chacun de ces films une forme de demi tunnel dont la section transversale présente, comme montré à la figure 5, la forme générale d'un "U", dont l'âme 71 est constituée par la partie centrale du "U" et dont les ailes sont tournées en direction de l'autre demi tunnel et constituent un flanc longitudinal 70, solidaire d'un retour latéral externe 72. Les retours 72 des deux demi tunnels viennent en contact les uns contre les autres dans le plan médian longitudinal du tunnel, réglé pour être confondu avec le plan médian horizontal P des objets. Ces moyens A sont composés de deux parties identiques respectivement supérieures et inférieures assurant la mise en forme, l'une du film supérieur 2, l'autre du film inférieur 3, et disposées symétriquement par rapport au plan P, comme le montre la figure 8. Dans un but de simplification, il va donc être procédé à la description d'une forme d'exécution de la partie inférieure des moyens A, en référence à la figure 7.

Cette partie est donc composée de deux éléments essentiels à savoir, un préconformateur A1 et un conformateur A2. Le préconformateur A1 est constitué par une plaque 73 ayant, vue en plan par dessus, une forme trapézoïdale isocèle aux deux bords latéraux pentus 73c. Cette plaque est disposée parallèlement au plan P et de manière que son petit côté 73a soit en aval par rapport à la trajectoire de déplacement 74 du film correspondant, 2 ou 3. La figure 2 montre que des rouleaux 75 renvoient le film de manière à ce que sa trajectoire soit parallèle à la plaque 73. Cette plaque 73 est associée, dans la forme d'exécution représentée aux figures 7 à 9, à deux guides de renvoi constitués par des tiges cylindriques 76 qui, d'axe longitudinal parallèle à la trajectoire de déplacement du film, sont disposées parallèlement et à proximité de la plaque 73, et de manière que leur axe longitudinal coïncide avec les extrémités 73b du petit côté 73a de cette plaque, comme montré à la figure 7.

Le conformateur A2 est constitué par un caisson 77 de section générale en "U" et dont l'âme 77a est disposée parallèlement au plan de contact P avec son bord amont 77b disposé à l'aplomb du bord aval 73a de la plaque 73. Ses ailes 77c sont tournées du côté du plan P et sont munies d'un bord amont pentu 77d. Dans cette forme d'exécution, ces ailes sont solidaires de retours latéraux extérieurs 78 présentant un bord amont pentu 78a. Le conformateur est associé à deux guides de renvoi constitués par des tiges cylindriques 79 dont l'axe longitudinal est parallèle au plan P et parallèle aux plis 80 des retours 78. Chaque tige 79 est disposée dans la concavité de ce pli, comme le montre la figure 7.

L'angle forme entre chaque bord 73c et à l'arête 73a, celui formé entre chaque bord 77d du caisson 77 et à la verticale, de même que l'angle formé entre chaque bord 78a des retours 78 et le pli 80, ont tous une valeur de 45°.

Bien entendu, la plaque 73, le caisson 77 et les guides de renvoi 76 et 79 sont portés par un support non représenté, auquel ils sont fixés de manière amovible pour permettre leur remplacement en cas de modification des dimensions transversales du tunnel en rapport avec celles des paquets ou objets à conditionner. Ce support est avantageusement solidaire d'un prolongement 18a des plaques 18 du châssis 21, afin de bénéficier des possibilités de réglage par rapport au plan médian des objets.

Avec ce dispositif, lorsque l'un des films, par exemple celui 3 est dévidé de la bobine 12, par des moyens d'entrainement dont la structure sera précisée plus loin, il passe d'abord, comme le montre la figure 8, contre le préconformateur A1. A partir de l'arête aval 73a de celui-ci, sa partie centrale 81 est renvoyée en direction du plan P.

Simultanément, ses parties latérales viennent en contact avec les bords pentus 73c de la plaque 73 et sont d'abord renvoyées perpendiculairement à la trajectoire 74, suivant la flèche 82, puis sont redressés verticalement, par le guide de renvoi correspondant 76, en formant deux flancs 84 solidaires de la partie centrale 81 renvoyée par l'arête 73a. En d'autres termes, après passage sur le préconformateur A1, le film présente une section transversale en "U" dont la concavité est tournée vers l'aval de l'installation.

Lorsque le film parvient dans le conformateur A2, sa partie centrale 81 venant en contact avec l'arête amont 77b du caisson est redressée à l'horizontale, parallèlement au plan P, en suivant une trajectoire longitudinale dans le sens de la flèche 16. Simultanément, la portion 84a de chacun des flancs 84, passe sur le bord pentu 77d du caisson et est redressée horizontalement pour former le flanc 70 du demi tunnel, tandis que la portion 84b du même flanc 84 est renvoyée, par le guide de renvoi 79, sur une trajectoire transversale représentée par la flèche 85. Cette trajectoire amène la portion 84b contre la face inférieure du retour 78 correspondant, face qui est tournée à l'opposé du plan P. De là, la portion 84b rencontre le bord pentu 78a du retour qui l'amène sur la face supérieure de ce retour en lui donnant une trajectoire longitudinale et horizontale dans le sens de la flèche 16.

La figure 9 montre les différentes trajectoires communiquées au film lors de son passage sur le préconformateur A1 et sur le conformateur A2 et met en évidence que le film, ainsi obtenu, a en section transversale la forme générale d'un "U" composé d'une âme 71 avec deux flancs latéraux 70 munis de retours latéraux extérieurs 72.

La figure 2 montre que les deux parties constituant le dispositif A, non seulement assurent la mise en forme des deux films 2 et 3 constituant le tunnel mais aussi constituent orifices d'introduction pour les paquets 1 amenés par un convoyeur 86. Ce dernier est associé à des moyens réglables assurant l'espacement régulier des paquets, représentés ici comme étant des taquets 87, mais pouvant être tout autre moyen connu.

Lorsque les demi-tunnels sont réalisés, leurs retours latéraux 72 sont soudés deux à deux par les moyens B qui sont disposés dans la zone de formation de ces demi-tunnels et de part et d'autre des flancs de ceux-ci.

Comme montré figures 5 et 6, ces moyens B sont constitués, de chaque côté, par deux paires de galets, respectivement une paire amont avec galet supérieur 88a et galet inférieur 88b et une paire aval avec galet supérieur 89a et galet inférieur 89b. Les galets 88a et 88b comportent chacun une gorge 90 servant au passage d'une lame métallique verticale 92 de chauffage et de découpage, portée près des flancs 70 des demi tunnels par un support non représenté. En position de travail, cette lame éclipsable sécante la trajectoire des retours 72. Les deux paires de galets sont réalisées en matériau compressible isolant, tel qu'en silicone, et sont montées libres en rotation dans un support disposé latéralement à la trajectoire des objets 1 et des demi tunnels. Ce support est avantageusement constitué par un prolongement 18a de la plaque 18 afin de bénéficier des possibilités de réglage offertes par cette plaque. Les galets supérieurs 88a et 89a sont portés par des paliers 93, mobiles verticalement pour permettre de les éloigner des galets 88b et 89b lors de l'introduction au démarrage des retours 72 entre ces galets. Les paliers 93 sont associés à des moyens de pression permettant de plaquer fortement les galets supérieurs sur les galets inférieurs.

Avec cet agencement, lorsque les demi-tunnels sont déplacés, dans le sens de la flèche 16, par un effort de traction exercé sur eux en aval de ce poste, les retours 72 passent d'abord entre les galets 88a et 88b qui évitent tout déplacement relatif de l'un des retours par rapport à l'autre. Pour bénéficier de cette bonne tenue relative des deux retours 73 superposés, la lame 92 assure ici le découpage des deux retours en deux éléments, à savoir une bordure 72a solidaire du tunnel et une chute 72b, et assure simultanément la liaison des bords superposés de chacun des deux élément. Il faut noter que cette opération est réalisée alors que la partie des retours disposée entre les deux paires de galets est en tension longitudinale entre ces deux paires de galets. Cette tension provient, pour la bordure 72a, de l'effort de traction exercé sur les films, et, pour les chutes 72b, d'un effort de tirage procuré par des moyens d'embobinage de la chute. Ceux-ci comprennent un tambour 94 entraîné en rotation par des moyens d'entrainement 95, avec interposition d'un limiteur d'effort 96. Les moyens d'entrainement 95 ont une vitesse circonférencielle supérieure à la vitesse de tirage de la bordure 72a, afin que la chute 72b soit toujours sous tension, sous le contrôle du limiteur d'efforts, et que sa découpe, dans les retours 72, s'effectue dans d'excellentes conditions.

Après soudure, la bordure 72a, qui a une faible largeur de l'ordre de 1 mm, se confond avec les flancs, de sorte que le tunnel obtenu a pratiquement une section transversale rectangulaire. La soudure obtenue par les lames chauffantes est rectiligne, mince et régulière.

Enfin, et il s'agit là d'une caractéristique importante de l'invention, les moyens assurant le dévidage des films 2 et 3 de leurs bobines 11 et 12, ceux assurant le déplacement de ces films sur les moyens A assurant leur conformation, les moyens assurant le déplacement des demi tunnels, puis du tunnel et les moyens assurant le déplacement de l'objet disposé dans le conditionnement en cours de réalisation, sont constitués par les seules mâchoires 15 et 17, lorsqu'elles parcourent leur trajet de travail. En d'autres termes, l'effort de pinçage procuré par les mâchoires 15 et 17 sur les deux films 2 et 3 est utilisé, en combinaison avec le déplacement longitudinal de ces mâchoires, pour tirer les films et déplacer avec eux, en synchronisme avec le déplacement du convoyeur 7, l'objet ou paquet 1 reposant sur le film. Des barres longitudinales isolantes 13 portées par le châssis 21, parallèlement au trajet de travail des mâchoires 15-17, (figure 3), et venant en contact avec ces dernières garantissant leur pinçage ferme.

Grâce à ce moyen d'entrainement, l'objet en cours de conditionnement n'est soumis à aucune contrainte susceptible de le déformer, de le faire basculer ou de le déplacer par rapport aux films ou tunnel, ce qui permet de conditionner sans difficulté des objets fragiles ou n'offrant pas de résistance.

Par ailleurs, et comme montré à la figure 2, la fermeture progressive des mâchoires sur le tunnel de film assure le dévidage complémentaire des deux films, nécessaire dans l'intervalle entre deux paquets, pour la réalisation d'une soudure rigoureusement dans le plan médian horizontal P. Ainsi, il n'est pas nécessaire d'avoir recours à des moyens complémentaires pour accroître temporairement la vitesse de dévidage des films afin que, précisément, la longueur de ceux-ci entre deux paquets soit supérieure à la distance entre les deux paquets et permette leur contact à la moitié de cette distance. Cette opération de tirage est effectuée alors que la mâchoire 15 est froide et non alimentée électriquement, ce qui évite toute détérioration du film.

La figure 10 montre une variante de réalisation des moyens assurant, sur chacun des films la mise en forme du retour latéral 72. Dans cette variante, la plaque 73 de chacun des préconformateurs A1 est associée, de chaque côté, à un guide de renvoi 97 qui, dans sa partie aval, est identique, en forme et position, au guide de renvoi 76 montré aux figures 7 et 8, mais est prolongé, dans sa partie amont, par une partie 97a qui est coudée en 97b et parallèle au bord latéral 73c de cette plaque 73. Ce guide est associé à un autre guide de renvoi 98, constitué également par une tige cylindrique dont l'axe longitudinal est parallèle à la plaque 73 et parallèle à l'arête aval 73a de cette plaque. Ce guide 98 est disposé de façon à être en coïncidence avec le coude 97b du guide de renvoi 97. Quant au caisson 77 du conformateur, il est muni de retours latéraux 99 présentant, chacun, des bords amont 99a qui sont parallèles à l'arête aval 77b du caisson 77 et sont disposés à l'aplomb du guide de renvoi 98 précité.

Lorsque le film 2 ou 3, se déplaçant dans le sens de la flèche 74, parvient dans cette zone de conformation, chacune de ses bandes latérales est soumise à deux pliages distincts, un pliage formant une portion 84a, de la même manière que dans la forme d'exécution représentée à la figure 8, et un pliage formant la portion 84b, correspondant au retour final 72, mais réalisé par les renvois procurés par l'arête 73c, le guide 97a et le guide 98, comme le montre les flèches 82, 100 et 101. Lorsque la partie latérale 84b, ainsi mise en forme par le préconformateur A1, parvient sur le conformateur A2, le bord 99a du retour 99 assure uniquement son redressement à l'horizontale, parallèlement au plan P.

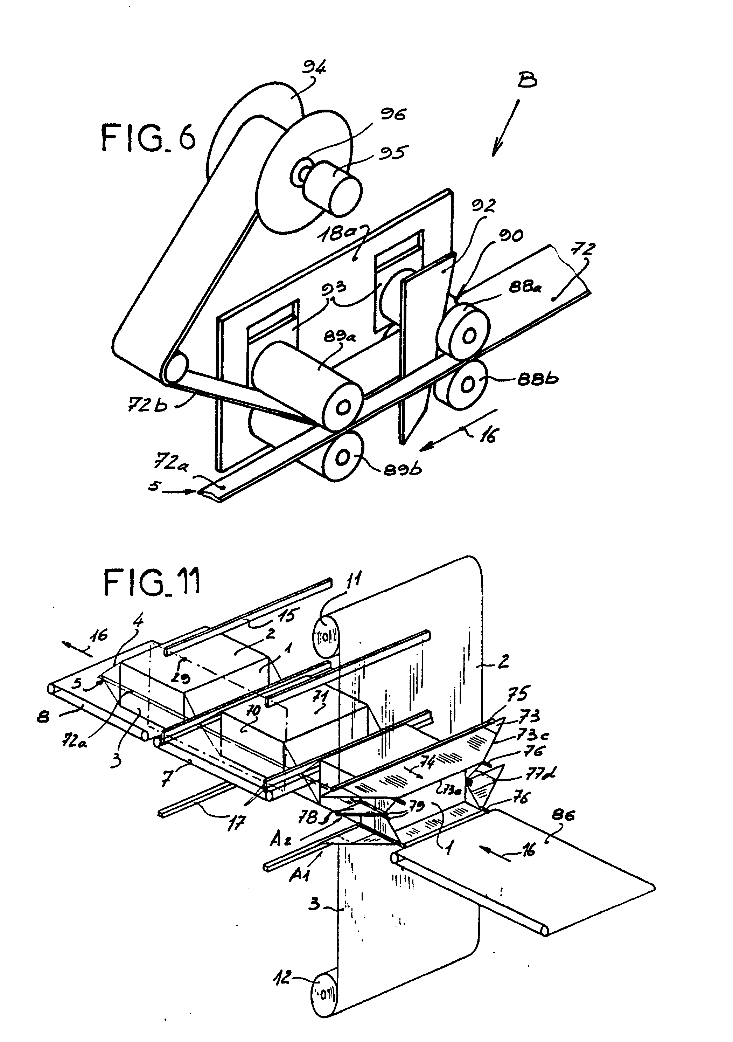

Dans la forme d'exécution représentée à la figure 11, dans chacune des deux parties des moyens de mise en forme A, la plaque 73 du préconformateur A1 constitue également l'âme du caisson 77 du conformateur A2, de sorte que l'arête 73a de la plaque 73 est confondue avec l'arête 77b de ce conformateur et que la trajectoire verticale du film entre ces deux éléments est limitée à l'épaisseur de ladite plaque. Cette disposition permet d'obtenir la même mise en forme de chaque film, mais avec un encombrement réduit.

Il ressort de ce qui précède que, quelle que soit sa forme d'exécution, l'installation, selon l'invention, permet, de manière automatique, et dans le cadre d'un mouvement continu, mais aussi éventuellement dans le cadre d'un mouvement séquentiel si l'alimentation en objets l'exige, de donner à deux films plans se dévidant de bobines, la forme des demi tunnels en "U" avec retours latéraux externes constituant enveloppe d'objets introduits entre eux de lier longitudinalement les deux demi tunnels, sans glissement et par des soudures parfaitement positionnées à mi hauteur, pour former un tunnel régulier, puis d'assurer les liaisons transversales par des soudures également parfaitement positionnées à mi hauteur de l'objet. Cette installation permet également, par ses moyens de réglage du positionnement du plan médian horizontal du tunnel et par l'amovibilité des moyens de mise en forme des films, mais aussi par la possibilité de faire varier le nombre de mâchoires et l'intervalle entre mâchoires, de conditionner des objets de dimensions variables, tant verticalement que transversalement ou longitudinalement. Elle procure ainsi une polyvalence qu'aucune installation actuelle ne procure.

**Revendications**

1. Installation de conditionnement automatique d'objets sous film souple, du type comportant plusieurs convoyeurs à bande (86, 7 et 8), disposés les uns à la suite des autres, un bâti fixe (6) muni de deux supports respectivement supérieur (9) et inférieur (10) portant chacun, libre en rotation, une bobine de film souple (11-12), des moyens de renvoi amenant chacun des films supérieur et inférieur de part et d'autre de la trajectoire des objets (1) à conditionner, des moyens communiquant un effort de tirage sur les films se dévidant de chacune des bobines (11-12), des moyens aptes à lier ensemble les bords longitudinaux des films, et deux jeux de mâchoires transversales (15-17), dont chacune des mâchoires est reliée à des moyens motorisés lui faisant décrire une trajectoire fermée comprenant un trajet longitudinal de travail, dans le sens de déplacement des objets (1) et dans le plan médian horizontal (P) de ceux-ci, et un trajet de retour, caractérisée en ce qu'elle comprend :

- d'une part, au poste de chargement des objets (1), des moyens (A) composés de part et d'autre du plan médian horizontal (P) et en aval de chaque bobine (11-12), d'un préconformateur (A1) qui, renvoyant le film en direction du plan (P) précité en lui donnant une section transversale en "U", est constitué, d'une part, par une plaque (73), parallèle au plan de contact précité, contre laquelle le film défile parallèlement et présentant en vue de dessus une forme trapézoïdale isocèle avec son petit côté (73a) tourné vers l'aval, et, d'autre part, par au moins deux guides de renvoi constitués par des tiges cylindriques (76), parallèles à la trajectoire du film et disposées en coincidence avec les extrémités (73b) du petit côté (73a) de la plaque (73), et d'un conformateur (A2) qui, renvoyant le film sur une trajectoire parallèle au plan médian horizontal (P), en donnant à ce film une forme de demi-tunnel en "U" dont la concavité est tournée vers ce plan, est constitué par un caisson (77) de section en "U", dont l'âme (77a) est parallèle au plan précité, avec son bord amont (77b) à l'aplomb du bord aval (73a) du préconformateur (A1), et dont les ailes (77c) sont tournées du côté de ce plan médian (P), sont munies chacune d'un retour (78), coudé vers l'extérieur, et présentent chacune un bord amont pentu (77d), et des moyens pour former, en bordure de chacun des flancs (70) du demi-tunnel, un retour latéral (72) venant en contact, dans le plan médian horizontal (P), avec le retour formé dans l'autre film,

- d'autre part, immédiatement en aval de la zone de formation des demi tunnels, et de part et d'autre des flancs de cestunnels, des lames chauffantes verticales (92) qui, intercalées chacune entre des paires amont et aval de galets (88-89) de maintien des retours sectionnent les retours et forment deux soudures longitudinales, minces et rectilignes, liant les flancs des demi-tunnels,

- tandis que les moyens communiquant l'effort de tirage à chacun des films (2-3) au tunnel et à l'objet (1) disposé dans ce tunnel, sont constitués, du poste de chargement jusqu'au début du convoyeur (86) d'évacuation des paquets, par les seules mâchoires transversales (15-17).

2. Installation selon la revendication 1, caractérisée en ce que les moyens de formation des retours latéraux de chaque film conformé en "U" sont constitués, d'une part, par le bord amont (78a) de chacun des retours (78) du conformateur (A2), bord qui est pentu d'amont en aval en allant de l'aile du conformateur à l'extrémité libre de ce retour et, d'autre part, par un guide de renvoi (7) constitué par une tige cylindrique (79), parallèle au pli (80) du retour (78) et disposé dans la concavité de ce pli.

3. Installation selon l'ensemble des revendications 1 et 2, caractérisée en ce que la plaque (73), constitutive du préconformateur (A1), est confondue avec l'âme du conformateur (A2), avec son bord aval (73a) confondu avec le bord amont (77b) de ce conformateur.

4. Installation selon la revendication 1, caractérisée en ce que les moyens de formation des retours latéraux de chaque film sont disposés à proximité du préconformateur (A1) et sont constitués, pour chaque côté d'un film, d'une part, par un prolongement amont (97a) du guide de renvoi (97) associé à la plaque (73) du préconformateur, ce prolongement étant coudé en (97b) et disposé parallèlement au bord latéral incliné (73c) de la plaque (73), et, d'autre part, par un second guide de renvoi qui, constitué par une tige cylindrique (98), parallèle au bord aval (73a) du préconformateur, est disposé en coïncidence avec le coude (97b), formé entre le guide (97) et son prolongement (97a), et à l'aplomb du bord transversal (99a), amont et droit, du retour latéral (99) correspondant du conformateur (A2).

5. Installation selon l'une quelconque des revendications 1 à 4, caractérisée en ce que l'angle formé entre le bord incliné (73c) du préconformateur (A1) et le bord aval (73c) de ce préconformateur, l'angle formé entre les arêtes inclinées amont (77d) et le plan de l'âme (77a) du caisson (77) du conformateur (A2), de même que l'angle formé entre le pli (80) de ce caisson et le bord incliné (78a) de chaque retour (78), ont une valeur de 45°.

6. Installation selon l'une quelconque des revendications 1 à 5, caractérisée en ce quechaque lame chauffante verticale (92) estéclipsable, pénètre partiellement dans les gorges (90) d'une paire amont de galets superposés (88a-88b), est disposée dans l'intervalle entre ces galets amont et une paire aval de galets superposés (89a-89b) et est associée à des moyens (94 à 96) exerçant un effort de tirage vers l'aval, au moins sur les chutes (72b) découpées dans les retours (72), tandis que les divers galets sont réalisés en matériau compressible et sont associés à des moyens pressant ceux supérieurs (88a-89a) contre ceux inférieurs (88b-89b).

7. Installation selon la revendication 6, caractérisée en ce que les moyens exerçant l'effort de tirage sur les chutes (72b) sont constitués par un tambour (94) d'enroulement de ces chutes lié, avec interposition d'un limiteur de couple (96), à des moyens d'entrainement (95) aptes à le faire pivoter avec une vitesse circonférencielle supérieure à la vitesse maximale de tirage des films et du tunnel.

8. Installation selon l'une quelconque des revendications 1 à 7, caractérisée en ce que les moyens (A) conformant les films, les moyens (B) de liaison des retours latéraux des deux demi tunnels et les jeux de mâchoires (15) et contre mâchoires (17), avec leurs moyens d'entrainement, sont disposés sur un châssis (21) qui, indépendant du bâti (6) portant les convoyeurs (7 et 8), est lié à ce bâti par des moyens de réglage (23-24) de sa position verticale, pour amener en coincidence le plan médian horizontal du tunnel avec le plan médian horizontal (P) des objets, quelle que soit la hauteur de ces objets.

9. Installation selon l'une quelconque des revendications 1 à 8,caractérisée en ce queles extrémités latérales de chacune des mâchoires (15) et contre mâchoires (11) sont fixées, de manière amovible, sur les maillons des chaines latérales (29 à 31), assurant leur entrainement.

FIG.1

FIG.5

FIG.9

FIG.2

## FIG.3

## FIG.4

FIG.7

FIG.8

FIG.10

FIG. 6

FIG. 11

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 257 267 (WOMAKO) <br> * Colonne 6, ligne 53 - colonne 8, ligne 34; fig. * <br> --- | 1 | B 65 B  9/02 <br> B 65 B  51/18 |
| A | GB-A-1 146 959 (ANDERSON) <br> * Page 9, lignes 33-106; figures 3-9 * <br> --- | 1 | |
| D,A | GB-A-2 065 590 (MITSUBISHI) <br> * Page 5, lignes 20-87; fig. * <br> ----- | 1 | |

**DOMAINES TECHNIQUES RECHERCHES (Int. Cl.5)**

B 65 B

Le présent rapport a été établi pour toutes les revendications

| Lieu de la recherche | Date d'achèvement de la recherche | Examinateur |
|---|---|---|
| LA HAYE | 04-09-1990 | JAGUSIAK A.H.G. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
........................................................................
& : membre de la même famille, document correspondant

EPO FORM 1503 03.82 (P0402)